# EUROPEAN PATENT APPLICATION

(11) **EP 1 806 176 A1**
(43) Date of publication of application: **11.07.2007**
(21) Application number: 06000429.8
(22) Date of filing: 10.01.2006
(51) Int. Cl.: B01J 8/02

(54) **Apparatus for the production of synthesis gas**

(71) Applicant: Casale Chemicals S.A., 6900 Lugano-Besso (CH)
(72) Inventor: Zanichelli, Luca, I-22010 Grandola ed Uniti (CO) (IT); Ferrini, Cristina, CH-6932 Breganzona (CH)
(74) Representative: Zardi, Marco

(57) **Abstract**

An apparatus (1) for producing synthesis gas is described comprising a substantially cylindrical shell (2) closed by opposite bottoms (3, 4), at least one inlet opening (8) for feeding a gaseous flow comprising oxygen, at least one inlet opening (7) for a gaseous flow comprising hydrocarbons and at least one outlet opening for a flow of synthesis gas and at least one burner (9) in fluid communication with a reaction chamber (15) for partially oxidising and/or reforming said hydrocarbons obtaining said flow of synthesis gas, the apparatus being characterised in that it comprises a pipe (12) of ceramic material substantially coaxial with said shell (2) and defining an annular interspace (13) with it, said pipe (12) of ceramic material being externally coated with a coating (14) of ceramic fibres so as to substantially fill said annular interspace (13) and internally defining said reaction chamber (15).

## Description

### Field of application

In its most general aspect, the present invention concerns an apparatus for producing gaseous mixtures comprising hydrogen, carbon monoxide and optionally nitrogensuch as synthesis gases for methanol and ammonia.

In particular, the present invention concerns an apparatus of the aforementioned type comprising a substantially cylindrical shell closed at opposite ends, at least one inlet opening for feeding a gaseous flow comprising oxygen, at least one inlet opening for e feeding a gaseous flow comprising hydrocarbons, at least one outlet opening for a flow of synthesis gas, at least one burner in fluid communication with a reaction chamber for carrying out reforming reactions of the hydrocarbons and/or for partially oxidising said hydrocarbons obtaining said flow of synthesis gas, said reaction chamber being in fluid communication with said at least one outlet opening and optionally containing a suitable catalytic bed to promote said reforming reactions.

In the remainder of the description and in the subsequent claims, the term "gaseous flow comprising oxygen" generically indicates a comburent gas comprising oxygen and optionally steam and/or nitrogen, whereas the term "gaseous flow comprising hydrocarbons" indicates a combustible or process gas comprising hydrocarbons, and optionally also carbon dioxide, hydrogen, carbon monoxide and steam.

### Prior art

As it is well known, apparatuses of the aforementioned type are widely used to carry out secondary reforming or autothermal reforming of hydrocarbons (ATR) in the presence of catalyst in the aforementioned reaction chamber or partial oxidisation of hydrocarbons (POX) in the absence of catalyst, obtaining synthesis gas for the production of various chemical compounds, in particular synthesis gas for the production of ammonia and methanol.

Within the use for secondary reforming, the combustible gas generally comes from a primary reforming section where hydrocarbons like for example natural gas, fuel oil, LPG (liquid petroleum gas) or refinery gas and mixtures thereof, have been made to react with steam. Such a combustible gas generally contains light hydrocarbons (for example C₁-C₄) as well as hydrogen, carbon monoxide, carbon dioxide and steam. In the secondary reforming apparatus, the hydrocarbons are subjected to partial oxidation in a first zone of the reaction chamber beneath the burner, also known as combustion zone, with consumption of the oxygen contained in the comburent gas so obtaining a gaseous mixture. Such oxidation or combustion is highly exothermal and produces the heat necessary to promote the reforming reactions of the gaseous mixture that, instead, are endothermal, in a second zone of the reaction chamber beneath the combustion zone in which a suitable catalytic bed is installed, so as to obtain a gaseous synthesis flow comprising carbon monoxide and hydrogen.

Within the use for autothermal reforming, the partial oxidation of the hydrocarbons and the reforming with steam are combined in a single apparatus in the way indicated above without previously subjecting the hydrocarbons to primary reforming. Therefore, in this case, the combustible gas directly contains the hydrocarbons of the predetermined supply source (for example natural gas) to which carbon dioxide coming for example from a recycled gaseous flow can optionally be added.

In apparatuses intended for the partial oxidation of hydrocarbons (POX), the feeding of the comburent and combustible gaseous flows is similar to that of an apparatus for autothermal reforming.However, in this case, the partial oxidation of hydrocarbons and optionally reforming reactions with steam are carried out together in a reaction chamber without catalyst.

It is also known that that aforementioned apparatuses operate, at least in the combustion zone, at rather high temperatures, generally 1000-1600°C and this makes it necessary to protect the metallic structure of the shell. For this purpose, the inside of the shell is coated with some layers of a refractive coating, generally made of preformed bricks or casts of refractive cements, which however has various drawbacks.

First of all, it should be noted that the material of the refractive coating must satisfy different characteristics of resistance to high temperatures, of heat conductibility and of heat expansion coefficient, according to whether it constitutes a more inner layer (therefore more subject to high temperatures) or a more outer layer (less subject to high temperatures) of the refractive material. This implies that the refractive coating must necessarily consist of multiple layers of different materials.

In order to obtain a suitable resistance to high temperatures and a low heat dispersion one is also forced to make refractive coatings of substantial radial thickness (300-500 mm), generally consisting of alternating layers of different materials.

Moreover, the installation of such refractive coatings is very laborious requiring very long time periods and highly specialised personnel since it is necessary to arrange the bricks or cement casts that make up the refractive coating very accurately avoiding to the maximum possible extent leaving interspaces or channels for the diffusion of heat towards the shell.

As well as being difficult to make and install, conventional refractive coatings impose substantial restrictions upon the operation of the aforementioned apparatuses. In particular, during the heating and cooling steps of the apparatus, the presence of the refractive coating forces the adoption of suitable temperature gradients per unit time (dT/dt) that allow the dilation of the various refractive layers, without the thermal dilation differences, due to the temperature differences in the thickness of the refractive coating and to the different materials used, causing the occurrence of thermal stresses greater than those acceptable for the materials leading to the often ruinous breaking of the coating itself.

Indeed, it should be noted that, for example, during the heating which proceeds from the inside towards the outside of the apparatus, the thermal stresses are generated by the fact that the thermal dilation of the hotter inner layers is prevented by the outer ones.

For these reasons, the heating and cooling steps of the aforementioned apparatuses can require a number of days.

In addition, it should be noted that the refractive coating can be damaged by the flames of the burner(s) that, if they are too long, can indeed lick the refractive material delimiting the combustion zone exposing the material to excessive heat and temperatures.

For these reasons, the bricks or refractive cements that constitute the refractive coating inside the shell require frequent replacement which results in high maintenance costs and production losses.

The technical problem at the basis of the present invention is that of providing an apparatus for producing synthesis gas that overcomes the aforementioned drawbacks and in particular an apparatus for producing synthesis gas that is simple to make and allows high production capacities to be obtained with low operating, investment and maintenance costs.

### Summary of the invention

Such a technical problem is solved by an apparatus for producing synthesis gas comprising a substantially cylindrical shell closed at opposite ends, at least one inlet opening for feeding a gaseous flow comprising oxygen and a gaseous flow comprising hydrocarbons, at least one outlet opening for a flow of synthesis gas, at least one burner in fluid communication with a reaction chamber for partially oxidising and/or reforming said hydrocarbons obtaining said flow of synthesis gas, the apparatus being characterised in that it comprises a pipe of ceramic material substantially coaxial with said shell and defining an annular interspace with it, said pipe of ceramic material being externally coated with a coating of ceramic fibres so as to substantially fill said annular interspace and internally defining said reaction chamber.

The apparatus according to the invention can be used independently for secondary reforming, for autothermal reforming and for partial oxidation of hydrocarbons and it is particularly suitable for producing synthesis gas for methanol and ammonia.

In the case of use for secondary or autothermal reforming, the pipe of ceramic material contains on the inside a catalytic bed so as to separate the reaction chamber into two zones, notably a first reaction zone, in direct contact with the burner, for carrying out partial oxidation, and a second reaction zone in which there is said catalytic bed for carrying out reforming reactions.

In the apparatus according to the invention, the pipe of ceramic material has refractive properties that make it suitable for resisting the high operating temperatures, even over 1600°C, which are reached above all in the first reaction zone as a result of the exothermicity of the oxidation reactions of the hydrocarbons. Moreover, the pipe of ceramic material has a much lower thickness than that of conventional refractive coatings, preferably between 5 and 50 mm. According to a particularly preferred embodiment, the thickness of the pipe of ceramic material is between 20 and 50 mm.

The coating of the pipe of ceramic material also has suitable refractive properties, due to the presence of ceramic fibres but, at the same time, has low mass due to its porosity, low mechanical resistance since, given that it is a material consisting of fibres, it yields under load, and very low thermal conductivity combined with exceptional resistance to thermal shocks. In this way, it is advantageously possible to suitably protect the metallic structure of the shell from the high operating temperatures, all in a simple manner and with low installation costs thanks to the fact that it is no longer necessary to fix any refractive material directly onto the shell, but rather it is necessary to simply install a pipe of ceramic material with the relative outer coating inside the shell.

Moreover, it should be noted that the ceramic material of the pipe intrinsically has a high capability to resist much greater thermal shocks than those that can be withstood by conventional refractive materials thanks to the fact that the low thickness and the consequent relative high heat conductivity allow the temperature gradients in the ceramic pipe to be considerably reduced, with this minimising the consequent thermal stresses. At the same time the coating of ceramic fibres, since it is yielding does not contrast the thermal dilations of the ceramic pipe thus neutralizing the thermal stresses that are generated during the operation of the apparatus according to the invention.

This advantageously allows the formation of cracks or breaks in the pipe of ceramic material to be reduced with a consequent increase in its useful life. Moreover, the increased resistance to thermal shocks allows the times necessary to heat and cool the apparatus according to the invention to be substantially reduced.

In the case the pipe of ceramic material and its coating have to be replaced, the removal is made just as simple as installation, to the great advantage of a reduction in costs and maintenance times.

In the apparatus according to the invention, the pipe of ceramic material is obtained through *per se* conventional procedures, in particular through procedures that foresee the extrusion of a sintered ceramic material or plasma procedures in which the formation of tubular structures is carried out by spraying powders of a powdered ceramic material into a plasma burner kept at a temperature of 5000-10000°C, so as to melt said powders and thus make them stick together on a rotating body.

Preferably, the ceramic material used to produce the aforementioned pipe comprises sintered aluminium and zirconium oxides. In order to reduce the passage of gas, from the reaction chamber towards the coating of ceramic fibres, through the intrinsic pores of the ceramic material, the inner surface of the ceramic pipe can be subjected to a vitrification process so as to reduce or eliminate surface porosity.

Preferably, the pipe of ceramic material is formed from modules of pipe pieces fitted together.

The ceramic fibres that constitute the coating of the ceramic pipe can be continuous or can have a predetermined length (for example cut fibres). The ceramic fibres can contain crystalline and vitreous phases and are obtained from different materials like for example metallic oxides, metallic nitrides, metallic carbides and combinations thereof.

For example, the ceramic fibres can mainly or completely comprise fibres formed from metallic oxides like for example alumina, alumina-silica, alumina-boron oxide-silica, silica, zirconium oxide, silica- zirconium oxide, titanium oxide, titanium oxide-silica, rare earth oxides and combinations thereof.

The coating of ceramic fibres can be of any suitable shape for example in the form of loose fibres, or in the form of atape, felt, fabric or unwoven fabric wound around the pipe of ceramic material.

Preferably, in the present invention, the coating comprises ceramic fibres formed from allumina and silica. Coatings of this type that are particularly preferred are the commercial products known as kaowool.

Further characteristics and advantages of the present invention shall, moreover, become clear from the following description of some preferred examplary embodiments, given for representative and not limiting purposes with reference to the attached figures.

### Brief description of the figures

Figure 1 shows a schematic view in longitudinal section of an apparatus for producing synthesis gas according to a first embodiment of the invention,
Figure 2 shows a schematic view from above and in partial section of the apparatus of figure 1,
Figure 3 shows a schematic view in longitudinal section of an apparatus for producing synthesis gas according to a second embodiment of the invention.

### Detailed description

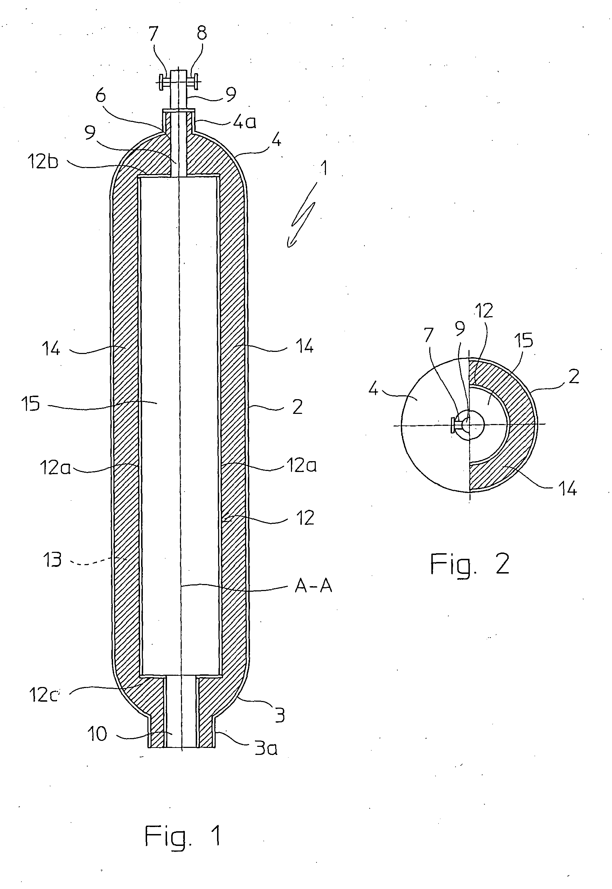

With reference to figures 1 and 2, an apparatus according to the invention for producing synthesis gas is globally indicated with 1.

The apparatus 1 can be used particularly for partial oxidation and/or reforming of hydrocarbons in the absence of catalyst and it is particularly suitable for producing synthesis gas for methanol and ammonia.

The apparatus 1 generally operates at temperatures of between 800-1700°C and pressures of between 5-200 bar.

The apparatus 1 comprises a substantially cylindrical shell 2 with vertical axis A-A closed at the opposite ends by respective lower bottom 3 and upper bottom 4. The upper bottom 4 is provided with a protrusion 4a in which an opening is formed for the insertion, in a suitable housing 6, of a *per se* conventional burner, globally indicated with 9. The body of the burner 9 projects from said protrusion 4a towards the outside of the shell 2 and ends at the top with a mouth 7 constituting an opening for the entry of a gaseous flow comprising hydrocarbons and a mouth 8 constituting an opening for the entry of a gaseous flow comprising oxygen.

A collector 10 for collecting synthesis gas is instead envisaged close to the lower bottom 3, said collector 10 extends in a protrusion 3a of the lower bottom base and ends with a mouth (not shown) constituting the outlet opening of the synthesis gases from the shell 2.

In accordance with the present invention, the apparatus 1 also comprises a pipe 12 of ceramic material with a smaller diameter than that of the shell 2 and coaxial with it so as to define an annular interspace 13. More specifically, the pipe 12 of ceramic material has opposite vertical walls 12a (parallel to the axis A-A of the shell 2) as well as, at the opposite ends, a upper bottom 12b and a lower bottom 12c of suitable shape, like for example flat, as shown in figure 1, hemispherical or semi-elliptical. The bottoms 12b and 12c, top and bottom respectively, are each equipped with an opening so as to place the pipe 12 of ceramic material in fluid communication at the bottom with the collector 10 for collecting the synthesis gases and at the top with the burner 9.

On the inside, the pipe 12 of ceramic material defines a reaction chamber 15 for carrying out reforming reaction and/or partial oxidation reaction of hydrocarbons, said reaction chamber 15 being delimited at the top by the upper bottom 12b of the pipe 12 and by the burner 9, and at the bottom by the lower bottom 12c of the pipe 12.

Of course, the pipe 12 of ceramic material may have any shape, i.e. it can have a circular or polygonal cross section, for example hexagonal.

In the apparatus 1, the pipe 12 of ceramic material is externally coated with a coating 14 of ceramic fibres so as to substantially fill the annular interspace 13. In this way it is advantageously possible to adequately protect the metallic structure of the shell from high operating temperatures of the apparatus 1.

Moreover, it should be noted that the coating 14 of ceramic fibres is also provided close to the lower bottom and upper bottom 3 and 4 and in the corresponding protrusions 3a and 4a so as to advantageously protect the burner 9 and the outlet collector 10 of the synthesis gases from the high operating temperatures. As far as the operation of the apparatus 1 is concerned, a gaseous flow comprising hydrocarbons and a gaseous flow comprising oxygen entering the respective mouths 7 and 8 is fed to the burner 9 and conveyed from it to the reaction chamber 15 of the pipe 12 of ceramic material.

In the reaction chamber 15 the partial oxidation reaction of the hydrocarbons is carried out with consumption of oxygen reaching high temperatures (1000-1700°C), due to the high exothermic content of the oxidation reactions, obtaining a "hot" gaseous mixture, i.e. with high thermal content.

Such a gaseous mixture can thus undergo, again in the reaction chamber 15, highly endothermal reforming reactions of the hydrocarbons, promoted by the reaction heat deriving from the partial oxidation. Therefore, a synthesis gas comprising carbon monoxide, hydrogen and optionally nitrogen is obtained which through the collector 10 comes out from the apparatus 1.

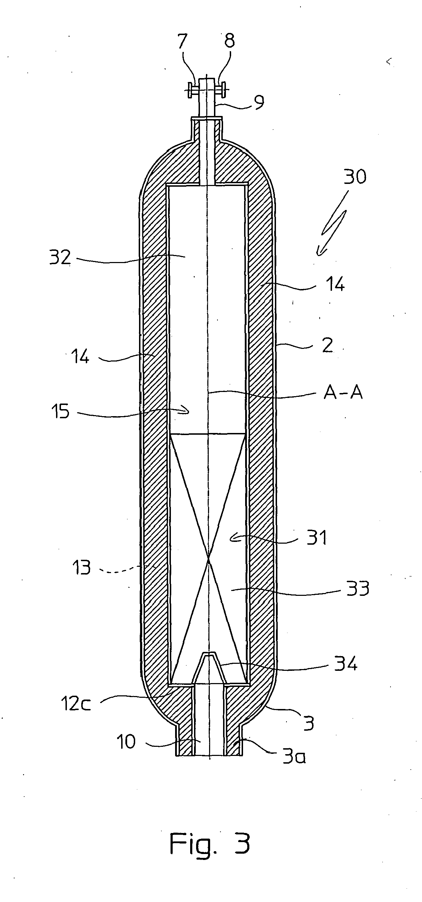

Figure 3 illustrates a further embodiment of the apparatus according to the invention for producing synthesis gas. In such a figure, structural elements that are common or functionally equivalent to those of the apparatus 1 represented in figures 1 and 2 have been given the same reference numerals.

The apparatus illustrated in figure 3, globally indicated with 30, differs from the apparatus 1 in that it has a catalytic bed 31 in a bottom portion of the pipe 12 of ceramic material suitably supported by a support element 34. In this way, the reaction chamber 15 defined by the pipe 12 of ceramic material is divided into two zones namely a first zone 32 or top zone in contact with the burner 9 and a second zone 33 or bottom zone filled with catalyst of the catalytic bed 31.

In particular, the top zone 32 is delimited at the top by the upper bottom 12b of the tube 12 and by the burner 9, and at the bottom by the maximum level reached by the catalyst, indicated by the line 31 a in figure 3.

The apparatus 31 can be used particularly for obtaining synthesis gas through autothermal or secondary reforming in which the partial oxidation of the hydrocarbons is substantially carried out in the first reaction zone 32 and the reforming in the second reaction zone 33 with the aid of the catalyst of the catalytic bed 31. The main advantage of the apparatus for producing synthesis gas according to the invention lies in the simplicity of installation and maintenance of the refractive material, consisting of the pipe of ceramic material and of its outer coating, all at reduced costs compared to known apparatuses.

Another advantage of the apparatus according to the invention lies in the capability of reducing operating costs since, thanks to the capability of the coating of ceramic fibres to absorb the thermal dilations of the pipe of ceramic material, it is not necessary to frequently replace the refractive material inside the apparatus.

Another advantage of the apparatus according to the invention lies in its greater production capacity thanks to the fact that it is possible to reduce the radial thickness of the coating of the pipe to a few tens of millimetres (for example 100 mm) to have adequate protection against heat of the shell, which consequently allows to increase the overall volume available for carrying out the oxidation and reforming reactions to be increased, at the same external size of the apparatus.

A further advantage of the reforming apparatus according to the invention lies in the fact that the pipe of ceramic material and the relative coating of ceramic fibres have relatively low costs which allows the investment costs to be reduced.

Of course, a man skilled in the art can bring numerous modifications and variants to the apparatus according to the invention, all of which are in any case covered by the scope of protection of the following claims. For example, for some specific applications, the opening or inlet mouth for the gaseous flow comprising hydrocarbons could be envisaged on the shell instead of on the burner so as to enter the hydrocarbons directly into the reaction chamber, for example through a duct outside the burner and coaxial with it.

## Claims

1. Apparatus (1) for producing synthesis gas comprising a substantially cylindrical shell (2) closed by opposite bottoms (3, 4), at least one inlet opening (8) for feeding a gaseous flow comprising oxygen, at least one inlet opening (7) for a gaseous flow comprising hydrocarbons and at least one outlet opening for a flow of synthesis gas and at least one burner (9) in fluid communication with a reaction chamber (15) for partially oxidising and/or reforming said hydrocarbons obtaining said flow of synthesis gas, the apparatus being **characterised in that** it comprises a pipe (12) of ceramic material substantially coaxial with said shell (2) and defining an annular interspace (13) with it, said pipe (12) of ceramic material being externally coated with a coating (14) of ceramic fibres so as to substantially fill said annular interspace (13) and internally defining said reaction chamber (15).

2. Apparatus (1) according to claim 1, **characterised in that** said pipe (12) of ceramic material has a thickness of between 5 and 50 mm, preferably between 20 and 50 mm.

3. Apparatus (1) according to claim 1 or 2, **characterised in that** the pipe (12) of ceramic material is obtained through extrusion of a sintered ceramic material or plasma procedures.

4. Apparatus (1) according to any one of the previous claims, **characterised in that** the ceramic material used to produce said pipe (12) comprises sintered aluminium and zirconium oxides.

5. Apparatus (1) according to any one of the previous claims, **characterised in that** said pipe (12) of ceramic material is formed from modules of pipe pieces fitted together.

6. Apparatus (1) according to any one of the previous claims, **characterised in that** the coating (14) of ceramic fibres is in the form of loose fibres, or in the form of atape, felt, fabric or unwoven fabric wound around the pipe (12) of ceramic material.

7. Apparatus (1) according to any one of the previous claims, **characterised in that** the coating comprises ceramic fibres made of alumina and silica.

8. Apparatus (1) according to any one of the previous claims, **characterised in that** said pipe (12) of ceramic material contains a catalytic bed (31) in a portion thereof so as to divide said reaction chamber (15) into two distinct reaction zones (32, 33).

9. Apparatus (1) according to any one of the previous claims, **characterised in that** said at least one burner (9) is at least partially inserted into a housing (6) formed in a protrusion (4a) of the upper bottom (4) and it is provided with said at least one inlet opening (8) for feeding a gaseous flow comprising oxygen and said at least one inlet opening (7) for a gaseous flow comprising hydrocarbons.
